# EUROPEAN PATENT APPLICATION

(11) **EP 3 708 457 A2**
(43) Date of publication of application: **16.09.2020**
(21) Application number: 20162183.6
(22) Date of filing: 10.03.2020
(51) Int. Cl.: B61L 27/00, B61L 15/00, B60M 1/12

(54) **ELECTRIC POWER SUPPLY SYSTEM FOR TRAINS WITH INTEGRATED COMMUNICATION SYSTEM**

(30) Priority: 15.03.2019 SE 1950325
(71) Applicant: ICOMERA AB, 411 03 Göteborg (SE)
(72) Inventor: KARLSSON, Mats, 660 50 Vålberg (SE); EKLUND, Peter, 417 64 Göteborg (SE)
(74) Representative: AWA Sweden AB

(57) **Abstract**

An electric railway system comprising a continuous conductor running along the railway track, to supply high-voltage power to trains travelling on the railway system, wherein the conductor is arranged as an overhead line, suspended from poles or towers distributed along the railway track. The system further comprises access points for data communication with trains travelling on said railway system, wherein said access points are arranged on said poles or towers.

## Description

### Technical field of the invention

The present invention relates to an electric train system, and in particular an electric train system using overhead conductor lines, arranged suspended above the railway tracks.

### Background

Electric train systems have been known and used for more than 100 years, and are presently in use in many railway systems around the world. In particular, most high speed trains are operated by electricity.

Electric train systems require costly infrastructure investments. Typically, an overhead conductor line should be arranged essentially parallel with the rail tracks. To this end, poles or towers are provided on one or both sides of the railway tracks, and along the entire length of the railway. The poles or towers holds the overhead conductor line, and also an overlying catenary or messenger line, which is held in tension, and which is connected to the overhead conductor line by so-called droppers between the poles/towers, thereby maintaining the overhead conductor in a straight configuration.

Trains travelling on the railway receives power from the overhead conductor line by a pantograph.

Such systems are e.g. disclosed in US 4679672 and US 5881851.

In recent years the train service has developed rapidly, and it is nowadays common to offer access to a local area network (LAN) for passengers within the train.

It is generally challenging to achieve wireless communication possibilities for mobile devices which are moving, e.g. when moving over large distances with poor network coverage or when affected by unknown sources of noise interrupting a signal for communication, such as clients moving on e.g. trains, airplanes, and other types of moving vehicles. In particular, if a client, such as a mobile phone, moves over large areas the client has to connect to several base stations in order to maintain a sufficient connection for communication.

Further, e.g. train carriages are made of metal, and even the windows are normally covered with a metal film. Accordingly, train carriages are shielded compartments, and direct communication between terminal antennas within the carriages and externally located antennas is difficult to obtain.

The mobile nature of a client with respect to the base stations may also introduce several potential sources of communication performance degradation. Such sources may derive from complex terrain, competition for available channels, or the source may be an unknown source of noise related to e.g. radio-frequency interference.

At the same time, there is today an increasing demand from passengers to be able to communicate through mobile phones and other handheld terminals when travelling on e.g. trains, and also to be able to get access to the Internet with laptops, PDAs etc. Further, with the new smartphones, and the way these are used, with e.g. continuously operating applications, many phones are active at all times, meaning that many handovers are required when the train moves. Even though this problem is common for all moving vehicles, it is especially pronounced for vehicles moving at high speed, such as trains and airplanes, and trains are in addition facing problems with poor line-of-sight between the base stations and the train. This puts a strain on the wireless network infrastructure, leading to poor performance.

To this end, it is known to provide a mobile access router for data communication, also connected both to an external antenna and an internal antenna, in each carriage, in order to provide Internet access on board the vehicle. Such mobile access router solutions are e.g. commercially available from the applicant of the present application, Icomera AB, of Gothenburg, Sweden, and are also disclosed in EP 1 175 757 and WO 15/169917 by the same applicant. This method has greatly improved the reliability of high-bandwidth wireless communication for trains and other large vehicles. However, this solution may still be insufficient to obtain an optimal transmission performance, especially for large data volumes. Trains and other moving vehicles often pass through areas with bad radio coverage, and present solutions are often unable to handle the required traffic. Further, the data traffic using cellular network communication, such as over 3G or 4G, is relatively costly.

Further, it is known to communicate with trains and other vehicles through dedicated base stations arranged sequentially along the rail track, and with a certain distance apart. Such base stations are generally referred to as trackside base stations or trackside access points, and typically operates with e.g. WLAN. However, trackside networks are extremely costly to implement, since the base stations need to be very close to each other, thereby requiring a very large number of base stations arranged close to the railway or road, and relatively evenly distributed. Thus, on the one hand trackside base stations cannot be arranged too far away from each other, since the performance deteriorates rapidly when the distance increases, however, on the other hand, closely arranged trackside base stations interfere with each other, making efficient communication problematic. Thus, implementation of trackside networks requires huge investments, and takes very long time. Despite this, it may still be difficult to obtain good coverage over the entire railway or road, and the communication performance may still be poorl and inadequate. Also, high power is often needed to obtain adequate communication performance, which adds to the operation costs. Thus, known trackside communication systems are very costly both to install and to operate.

A further problem is that many wireless communication standards now use or intend to use very high frequencies, in the millimeter wavelength band. The availability of large portions of radio spectrum in the millimeter wave bands has been recognized by cellular network research and standardization bodies, notably exemplified by the use of such bands in upcoming 5G networks. Similar efforts are underlying local-area wireless network standardization bodies, as exemplified by the 60 GHz 802.11 ad standard. This has many advantages, but a problem with such high frequencies is that the signals are very sensitive to attenuation caused by the gases in the air, such as oxygen, thereby severely limiting the useable distance. Thus, should such high frequencies be used, the access points need to be even closer to each other, thereby increasing costs even further. Previous attempts to provide 60 GHz communication are disclosed in inter alia "Mobile and Personal Communications in the 60 GHz Band: A Survey" by F. Giannetti et al, Wireless Personal Communications 10, p. 207-243, 1999 and "Millimetrewave propagation along railway lines" by H. Meinel et al, IEEE Proceedings, vol. 130, part F, No. 7, December 1983.

There is therefore a need for an improved method and system for communicating with moving trains, allowing increased capacity, capacity utilization, quality and/or cost-efficiency.

### Summary of the invention

It is therefore an object of the present invention to provide an electric railway system that which alleviates all or at least some of the above-discussed drawbacks of the presently known systems.

This object is achieved by means of an electric railway system as defined in the appended claims.

In accordance with a first aspect of the invention, there is provided an electric railway system comprising a continuous conductor running along the railway track, to supply high-voltage power to trains travelling on the railway system, wherein the conductor is arranged as an overhead line, suspended from poles or towers distributed along the railway track, and wherein the system further comprises access points for data communication with trains travelling on said railway system, wherein said access points are arranged on said poles or towers.

It has been realized by the present inventors that it is in fact possible to use the already existent towers or poles used for the overhead line providing the power to the trains in an electrical train system, also to provide a very efficient wireless communication system. Since these towers/poles are already available, or anyway need to be mounted for new installations, the additional cost for also equipping some or all of the towers/poles with access points is very low.

In particular, this is suitable for high operating frequencies, such as at 60 GHz, since the additional cost for placing the access points is very low. The towers/poles are conventionally arranged at about every 60 meters. Access points may e.g. be arranged on every tower/pole, corresponding to about 60 meters between the access points, every second tower/pole, corresponding to about 120 meters between the access points, every third tower/pole, corresponding to 180 meters between the access points, or every fourth tower/pole, corresponding to 240 meters between the access points. Longer separation distances may also be used, depending on the frequencies used, the data rate needed, etc. If lower operating frequencies are used, such as 5 GHz, the distance between the access points may be even longer, such as on every 5^{th}, or even 10^{th} tower/pole, However, it may also be advantageous to place even such access points closer together, since it enables use of less costly and less powerful access points.

Preferably, the access points are preferably separated by a separation distance exceeding 50 m, such as exceeding 100 m, such as exceeding 150 m, such as exceeding 200 m, such as exceeding 250 m, such as exceeding 300 m. Simultaneously, the separation distance is preferably less than 750 m, such as less than 600 m, such as less than 500 m, such as less than 400 m, such as less than 300 m. The separation distances may be in the range of 50-750 m, and preferably in the range of 100-500 m, and more preferably in one of the ranges 50-300 m, such as 100-250 m, and 200-750 m, such as 300-500 m.

Preferably, the access points are adapted to communicate with trains on at least two different frequencies, such as at 60 GHz, 24 GHz, 5 GHz, etc, and preferably capable of communicating simultaneously on more than one frequency or frequency band. In one embodiment the access points are arranged to simultaneously communicate with trains on a first frequency or frequency band within the range of 1 GHz-25 GHz, and a second frequency or frequency band within the range of 25-100 GHz.

For simultaneous communication over two or more frequencies/frequency bands, each access point may be provided with two or more antennas, each antenna being assigned to communication over one of the frequencies/frequency bands.

The present invention also alleviates the problems with Doppler shift. Generally, if access points are arranged far from the rail, there are great difficulties to handle the Doppler shift, and the only known solution is to follow the train with high angle velocity, which is complicated to achieve in practice. However, since the access points, when arranged on the towers/poles of the electrical system, are arranged very close to, or even directly above, the railway tracks and the trains travelling thereon, the Doppler shift becomes constant, and is easy to handle.

The new solution is of particular importance for high frequencies, such as 60 GHz or above, since the beams by necessity becomes smaller and smaller at higher frequencies. At 60 GHz, the opening angle is in the range ½ - 1 degree. Thus, steering the beam correctly becomes much easier when the antenna is arranged closer to the train. Correspondingly, the beam steering for the antennas on the train also becomes simpler and more efficient.

Hereby, it also becomes possible to use a narrower lobe, whereby the gain and data rates can be increased, and at the same time the costs for installation becomes lower.

Another advantage of having the access points right above, or close to, the railway tracks is that it significantly facilitates handover, since the access points remain in connection with the train until the train passes the tower/pole, and then abruptly loose connection.

To facilitate handover, the access points of the electric railway systems may be arranged to communicate with a train in such a way that the train can communicate with more than one access point at the same time, and preferably at all times. This may be provided by keeping the separation distance between the access points so limited that the train can communicate both with the access point closest ahead, but also the next access point farther ahead. Additionally or alternatively, the access points may be arranged to communicate with trains both in a forward and a backward direction. Hereby, the trains may communicate with access points ahead of them, which the trains have not yet arrived to or passed, but also access points which have been passed, and which are now located behind the train.

The towers/poles may be provided with access points when newly installed. However, it is also feasible to retrofit existing towers/poles with access points.

The access points may be operating in accordance with the IEEE 802.11 standard, also known as WIFI. Alternatively, the access points may be operating in accordance with a cellular network standard(s), and preferably in accordance with the 5G standard.

The access points are preferably arranged essentially above the railway track, e.g. on transversally arranged cross-beams or arms connected to the poles. However, arrangement slightly besides the rails, e.g. on the poles on the sides of the rails, is also feasible, and provides almost the same advantages.

Preferably, the access points are arranged at a height above the railway tracks being less than 10 m, and preferably less than 7 m, and most preferably less than 5 m.

The access points may be arranged to operate at an operating frequency above 1 GHz, and preferably above 30 GHz, and most preferably above 50 GHz, such as at 5 GHz or 60 GHz. In one preferred embodiment, the operating frequency of the access points is within the extremely high frequency (EHF) range, extending between 30 and 300 GHz, corresponding to wavelengths in the range 1-10 mm.

The access points are preferably arranged distributed along the railway track, the distance between any two neighboring access points being less than 500 m, and preferably less than 400 m, and most preferably being less than 300 m. For example, the distance may be less than 250 m, less than 200 m, less than 150 m or less than 100 m.

The access points are preferably provided on at least every fifth pole or tower along the railway track, and preferably on every fourth pole or tower, and most preferably on every third pole or tower. The access points may also be provided on every second tower/pole, or on every tower/pole.

The electric railway system may further comprise connections to a fiber cable for data communication arranged in the track bed. However, the data communication between the access points may also be provided by a coaxial cable or the like, and may also be provided by microwave link connections. Thus, the electric railway system may further comprise a microwave link connecting at least two access points arranged at separate positions along said railway track.

The electric railway system may further comprise connections to electric low-power cable arranged in the track bed, said low-power cable providing power to the access points. However, power to the access points may also be provided in other ways. For example, it is possible to obtain a high-to-low power conversion from the high power of the overhead conductor line, to power the access points.

As yet another alternative, the power needed for the access points may be generated locally, e.g. by solar panels or the like arranged on the poles.

The antennas of the access points are preferably active antennas, and preferably active millimeter-wave antennas. The antenna may, for example, be phased array antennas for MIMO communication, for example in accordance with the 5G standard. The antennas may comprise an array of antenna elements, each antenna element being connected to a separate transceiver. The antenna array can be made relatively small, such as with a length and width extending over a few square centimeters. The whole access point may have a weight of less than 1 or 2 kg. Thus, it can easily be arranged on a tower/pole.

In one embodiment, two independently operable access points are provided on the same pole/tower, and being directed along the railway track in two different directions.

These and other features and advantages of the present invention will in the following be further clarified with reference to the embodiments described hereinafter.

### Brief description of the drawings

For exemplifying purposes, the invention will be described in closer detail in the following with reference to embodiments thereof illustrated in the attached drawings, wherein:
Fig 1 is a schematic illustration of a train having a wireless communication system for communication with an electric railway system in accordance with the present invention;
Fig 2 is a schematic illustration of an electric railway system in accordance with an embodiment of the present invention, and illustrating a train being associated with two trackside base stations of an external mobile network incorporated in the electric railway system;
Fig 3 is a schematic illustration of an antenna configuration to be used on trains in the systems of Fig 1 and 2;
Fig 4 is a side-view of a part of an electric railway system in accordance with an embodiment of the present invention; and
Fig 5-7 are exemplary alternative embodiments to be used in the system of Fig. 4.

### Detailed description of preferred embodiments

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the detailed embodiments described in the following are related to trains. However, it is to be acknowledged by the skilled reader that the method and system are correspondingly useable on other electrically powered rail-bound vehicles.

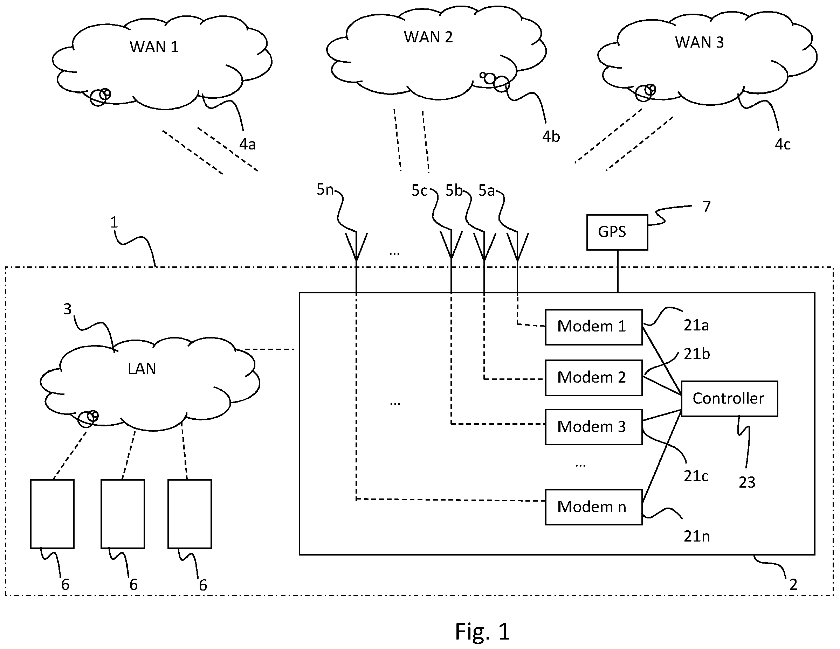

The electric railway system provides wireless communication to a communication system on-board trains travelling on the railway system. Referring first to Fig. 1, a communication system of a rail-bound vehicle 1, such as a train, may comprises a data communication router 2 for receiving and transmitting data between an internal local area network (LAN) 3, and one or several external wide area networks (WANs) 4a, 4b, 4c, and including at least one external network having a plurality of trackside base stations/access points distributed along a vehicle path of travel, preferably for communication in compliance with a Wireless Local Area Network (WLAN) standard, such as an 802.11 standard. These access points will be discussed in further detail in the following.

Communication to and from the external networks is provided through one or several antennas 5 a-n arranged on the train, the antennas may be arranged on the roof of the train, on side walls of the train, etc. Two or more data links are preferably available, either between the train and one of the WANs, and/or by using several WANs simultaneously.

For communication with the access points arranged on power poles or towers, directional antennas may be used, directed primarily in the forward and/or backward direction, i.e. facing the travelling direction or the direction opposite to the travelling direction.

The LAN is preferably a wireless network, using one or several internal antennas to communicate with terminal units 6 within the vehicle. It is also possible to use a wired network within the vehicle. The LAN may be set-up as wireless access point(s). The client(s) 6 may be computing devices such as laptops, mobiles telephones, PDAs, tablets and so on.

The data communication router further preferably comprises a plurality of modems 21 a-n. Assignment of data streams to different WANs and/or to different data links on one WAN is controlled by a router controller 23. The router controller 23 is preferably realized as a software controlled processor. However, the router controller may alternatively be realized wholly or partly in hardware.

The system may also comprise a receiver for receiving GNSS (Global Navigation Satellite System) signals, such as a global positioning system (GPS) receiver 7 for receiving GPS signals, indicative of the current position of the vehicle. The GNSS/GPS signals may be used for providing positioning data for applications which are less critical, and where the requirements for exactness and security are low. It may also be used as a complement to the position determination based on radio signal measurement, discussed in more detail below, to improve the accuracy and robustness of this even further. However, position data may additionally or alternatively be provided by the access points, since these are placed at fixed positions, on the poles or towers, and the distance between the access points and the train can e.g. be determined based on round-trip measurements or phase shift measurements.

The data communication router may also be denominated MAR (Mobile Access Router) or MAAR (Mobile Access and Applications Router).

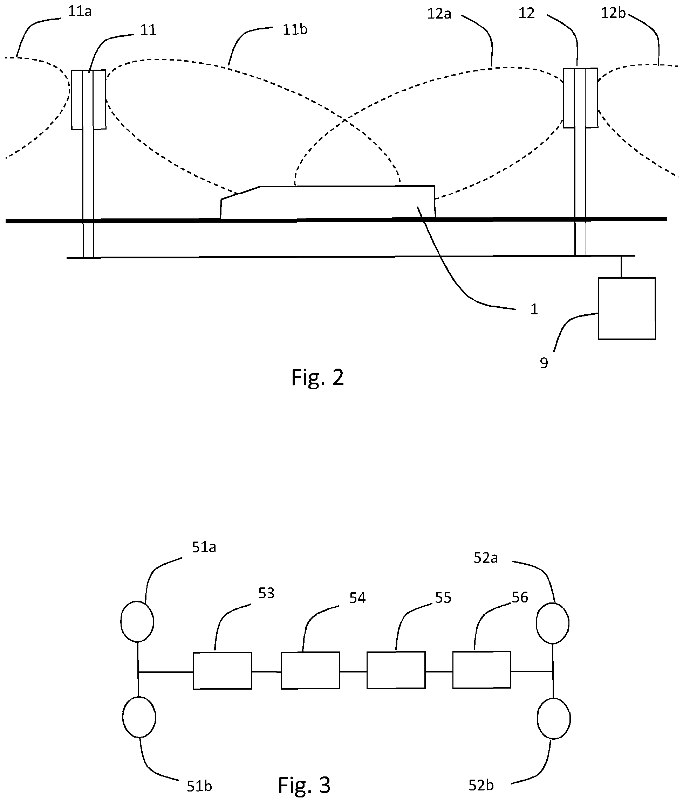

Referring now to Fig. 2, at least one external wide area network (WAN) includes a plurality of trackside base stations/ access points, distributed along a vehicle path of travel, i.e. the rail. The base stations/access points may operate in accordance with any known telecommunications standard, but preferably operate in compliance with a Wireless Local Area Network (WLAN) standard, such as an 802.11 standard. The external mobile network comprises a plurality of trackside base stations 11, 12, arranged along the vehicle path. The antenna devices have coverage areas 11a, 11b, 12a, 12b extending in both directions along the vehicle path. The coverage areas on the two sides of the antenna devices may be related to the same base station/access point, or to different base stations/access points. Thus, coverage area 11a and 11b may be related to the same base station/access point, or be operated independently, as different base stations/access points, and the same applies to coverage areas 12a and 12b, etc.

By directing the access points in two different directions, the access range increases by nearly the double. However, as an alternative it is also feasible to direct the access points only in one direction on each pole or tower.

The base stations/access points are connected to each other, and optionally to a controller 9, via a wired or wireless connection, such as via a fiber connection. The fiber connection is preferably arranged so that it runs along the railway track, and e.g. in the track bed.

The controller is preferably realized on a processor, and at least partly in software. However, the controller may also be realized on several processors, in a distributed fashion.

The coverage areas of the access points may be overlapping, allowing the mobile router of the vehicle to periodically or continuously access several access points simultaneously, and thereby distribute the communication between several data links.

The mobile router may also be connected to other external networks, and may consequently simultaneously distribute the communication also over these networks.

Thus, the vehicle may comprise a plurality of antennas, for communicating with different links and different external networks. A schematic illustration of this is provided in Fig. 3. This antenna arrangement, for example arranged on the roof of the train, may comprise directional antennas 51a and 51b directed to access points in the backward direction of the train, directional antennas 52a and 52b directed to access points in the forward direction of the train, and additional antennas 53-56 arranged to communicate with base stations of other external networks, e.g. via GSM, Satellite, DVB-T, HSPA, EDGE, 1X RTT, EVDO, LTE, Wi-Fi (apart from the trackside WLAN) and WiMAX. However, antennas may also be arranged at the front and aft side of the train.

The antennas 51a, 51b, 52a, 52b for communication with trackside access points may be an active millimeter-wave antenna, such as an active phased array antenna for high frequencies. The operating frequency is preferably 5 GHz or more. The operating frequency of the antenna may e.g. be within the extremely high frequency (EHF) range, extending between 30 and 300 GHz, corresponding to wavelengths in the range 1-10 mm.

The antenna may comprise an array of antenna elements, each antenna element being connected to a separate transceiver.

The antennas on the trackside access points is preferably of the same type as the antennas on the train, but it is also feasible to use different types of antennas.

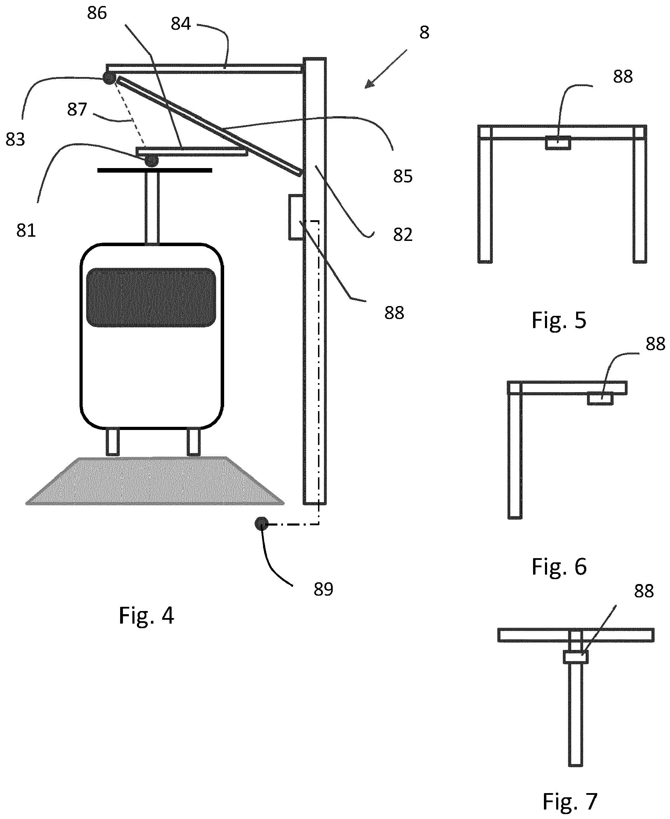

Referring now to Fig. 4, the electric railway system 8 comprises a continuous conductor 81, an overhead connector line, running along the railway track, to supply high-voltage power to trains travelling on the railway system. The conductor is arranged as an overhead line, suspended from poles or towers 82 distributed along the railway track. The continuous conductor may be connected to the poles or towers in various ways, as is per se known in the art. For example, the continuous conductor may be connected to a catenary 83, arranged above the continuous conductor by means of droppers (not shown). The catenary may be held by the tower/pole by a cross-beam or transversal arm 84, extending in a generally horizontal direction and being connected to the pole/tower at one end, and stabilized by a strut 85, extending in a slanted direction between one end connected to the pole/tower at a position on the transversal arm remote from the pole/tower, and one end connected to the pole/tower.

The continuous connector may further be connected to the pole/tower by a registration arm 86, e.g. connected to the strut 85, and by a flexible tie 87.

The pole or tower are preferably made as rigid elements, and can e.g. be made of steel lattice or tubular steel. However, the poles or towers may also be made of concrete, wood and the like, as is per se known in the art.

The cross-beam or transversal arm 84, the strut 85, and the registration arm 86 are all preferably relatively rigid elements, and may e.g. be made of steel or other metals.

Further, at least some of the poles/towers are provided with the above-discussed access points 88 for data communication with trains travelling on the railway system, wherein said access points are arranged on said poles or towers. These access points correspond to the above-discussed access points 11a-b and 12a-b.

The access points are preferably arranged to communicate at high operating frequencies, such as at 60 GHz.
Access points may e.g. be arranged on every tower/pole, corresponding to about 60 meters between the access points, every second tower/pole, corresponding to about 120 meters between the access points, every third tower/pole, corresponding to 180 meters between the access points, or every fourth tower/pole, corresponding to 240 meters between the access points. Longer separation distances may also be used, depending on the frequencies used, the data rate needed, etc. If lower operating frequencies are used, such as 5 GHz, the distance between the access points may be even longer, such as on every 5^{th}, or even 10^{th} tower/pole. The access points are preferably arranged distributed along the railway track, the distance between any two neighboring access points being less than 500 m, and preferably less than 400 m, and most preferably being less than 300 m. For example, the distance may be less than 250 m, less than 200 m, less than 150 m or less than 100 m.

The access points preferably operate in accordance with the IEEE 802.11 standard, also known as WIFI. Alternatively, the access points may be operating in accordance with a cellular network standard(s), and preferably in accordance with the 5G standard.

The access points may be arranged on the poles or towers themselves, as in the illustrative example of Fig. 4. However, alternatively, the access points may be arranged on the transversal arm or cross-beam, to be arranged more directly over the railway tracks. In a preferred embodiment, the access points are arranged essentially above the railway track. However, arrangement slightly besides the rails, e.g. on the poles on the sides of the rails, is also feasible, and provides almost the same advantages.

The transversal beam or cross-beam is typically at a height of 3-4 m above the railway tracks. It is advantageous to arrange the access points as close to the railway tracks as possible. Preferably, the access points are arranged at a distance from the railway tracks being less than 10 m, and preferably less than 7 m, and most preferably less than 5 m.

The electric railway system may further comprise connections to a fiber cable 89 for data communication arranged in the track bed. However, the data communication between the access points may also be provided by a coaxial cable or the like, and may also be provided by microwave link connections. For example, the electric railway system may further comprise a microwave link connecting at least two access points arranged at separate positions along said railway track.

The power to the access points may be provided in various ways. In accordance with one alternative, the electric railway system may further comprise connections to electric low-power cable arranged in the track bed, said low-power cable providing power to the access points. However, power to the access points may also be provided in other ways. For example, it is possible to obtain a high-to-low power conversion from the high power of the overhead conductor line, to power the access points. As yet another alternative, the power needed for the access points may be generated locally, e.g. by solar panels or the like arranged on the poles.

The antennas of the access points are preferably active antennas, and preferably active millimeter-wave antennas. The antenna may, for example, be phased array antennas for MIMO communication, for example in accordance with the 5G standard. The antennas may comprise an array of antenna elements, each antenna element being connected to a separate transceiver. The antenna array can be made relatively small, such as with a length and width extending over a few square centimeters. The whole access point may have a weight of less than 1 or 2 kg. Thus, it can easily be arranged on a tower/pole.

In one embodiment, two independently operable access points are provided on the same pole/tower, and being directed along the railway track in two different directions, as discussed in relation to Fig. 2. However, it is also possible to have the access points being directed only in a single direction.

In the embodiment illustrated in Fig. 4, the access point is provided on a pole having a laterally extending cross-beam or transversal arm, generally forming an inverted L-shape. In this embodiment, the access point is provided on the pole itself. However, other configurations are also feasible, as will be discussed in the following, in relation to Figs. 5-7.

In Fig. 5, a tower comprising two poles, arranged on opposite sides of the railway track, are provided, and with a cross-beam extending between the poles. In such an embodiment, the access point may advantageously be provided on the cross-beam, right above the track. However, it is also feasible to arrange the access point on one or both of the poles. In such an embodiment, the cross-beam may extend over two or more railway tracks. In that case, it is also feasible to provide more than one access point on the cross-beam, e.g. one over each track.

Fig. 6 illustrates an embodiment similar to the one discussed in relation to Fig. 4, with a single pole and a transversely extending arm. However, here the access point is not arranged on the pole, but on the transversely extending arm, and thereby being arranged more directly above the tracks.

Fig. 7 illustrates yet another embodiment, in which a single pole is provided, and a beam is arranged to extend out towards both sides, thereby forming two transversely extending arms. These arms may e.g. extend out over two parallel railway tracks.

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers.

Also, the various methods or processes outlined herein may be coded as software that is executable on one or more processors that employ any one of a variety of operating systems or platforms. Additionally, such software may be written using any of a number of suitable programming languages and/or conventional programming or scripting tools, and also may be compiled as executable machine language code.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An electric railway system comprising a continuous conductor running along the railway track, to supply high-voltage power to trains travelling on the railway system, wherein the conductor is arranged as an overhead line, suspended from poles or towers distributed along the railway track, and wherein the system further comprises access points for data communication with trains travelling on said railway system, wherein said access points are arranged on said poles or towers.

2. The electric railway system of clam 1, wherein the access points are operating in accordance with the IEEE 802.11 standard.

3. The electric railway system of claim 1, wherein the access points are operating in accordance with a cellular network standard(s), and preferably in accordance with the 5G standard.

4. The electric railway system of claim 1 or 2, wherein the access points are arranged essentially above the railway track.

5. The electric railway system of any one of the preceding claims, wherein each access point is operating simultaneously in accordance with at least two different communication standards.

6. The electric railway system of any one of the preceding claims, wherein each access point is operating simultaneously on at least two different frequencies or frequency bands.

7. The electric railway system of any one of the preceding claims, wherein at least two access points are arranged to be in simultaneous communication with each train, the at least two access points either both being in front of or behind the train, or at least one being in front of the train and at least one being behind the train.

8. The electric railway system of any one of the preceding claims, wherein the access points are arranged to operate at an operating frequency above 1 GHz, and preferably above 30 GHz, and most preferably above 50 GHz.

9. The electric railway system of any one of the preceding claims, wherein the access points are arranged at a height above the railway tracks being less than 10 m, and preferably less than 7 m, and most preferably less than 5 m.

10. The electric railway system of any one of the preceding claims, wherein the access points are arranged distributed along the railway track, the distance between any two neighboring access points being less than 500 m, and preferably less than 400 m, and most preferably being less than 300 m.

11. The electric railway system of any one of the preceding claims, wherein the access points are provided on at least every fifth pole or tower along the railway track, and preferably on at least every fourth pole or tower, and most preferably on at least every third pole or tower.

12. The electric railway system of any one of the preceding claims, further comprising connections to a fiber cable for data communication arranged in the track bed.

13. The electric railway system of any one of the preceding claims, further comprising connections to electric low-power cable arranged in the track bed, said low-power cable providing power to the access points.

14. The electric railway system of any one of the preceding claims, further comprising a microwave link connecting at least two access points arranged at separate positions along said railway track.

15. The electric railway system of any one of the preceding claims, wherein at least one pole or tower comprises two independently operable access points, directed along the railway track in two different directions
